# EUROPEAN PATENT APPLICATION

(11) **EP 0 538 856 A2**
(43) Date of publication of application: **28.04.1993**
(21) Application number: 92118081.6
(22) Date of filing: 22.10.1992
(51) Int. Cl.: G11B 5/31, G11B 5/39

(54) **Composite thin film magnetic head**

(30) Priority: 23.10.1991 JP 275172/91
(71) Applicant: MATSUSHITA ELECTRIC INDUSTRIAL CO., LTD., Kadoma-shi, Osaka-fu, 571 (JP)
(72) Inventor: Mitani, Satoru, Hirakata-shi, Osaka-fu (JP); Ryonai, Hiroshi, Higashi-Osaka-shi, Osaka-fu (JP); Nagata, Yuji, Yao-shi, Osaka-fu (JP); Nakamura, Kazuo, Toyonaka-shi, Osaka-fu (JP)
(74) Representative: Eisenführ, Speiser & Partner

(57) **Abstract**

In a head, in which an inductive thin film recording head and a magneto-resistive effect type thin film reproducing head are formed as one unit (41), an integral structure with less false pulse is provided. The magnetic head includes a magnetic or non-magnetic substrate (1), and a recording thin film magnetic head having a lower record yoke (1), a recording coil (3) and an upper record yoke (5), and a reproducing thin film magnetic head having an upper reproduce yoke (15), a lower reproduce yoke (9) and a magneto-resistive effect element (13) replacing part of the upper reproduce yoke which are laminated on the substrate, and the thickness of the lower reproduce yoke (9) is set to be larger than that of the upper reproduce yoke (15).

## Description

### BACKGROUND OF THE INVENTION

### 1. Field of the Invention

The present invention generally relates to a magnetic head, and more particularly, to a composite thin film magnetic head for use in a magnetic recording and reproducing apparatus.

Recently, in a field of magnetic recording, there has been a strong demand for a thin film magnetic head with narrow tracks and multi-tracks following the tendency to provide a higher recording density. In the thin film magnetic heads as referred to above, an inductive type head employing a coil and an MR head for reproduction utilizing the magneto-resistive effect (referred to as MR effect hereinafter) have been put into practical applications at present.

Although the inductive type head adopting the coil is advantageous in that it is capable of recording and reproducing by itself, since its reproducing output is proportional to a relative speed between a recording medium and the head, the output is undesirably reduced when the magnetic head is used for a magnetic tape device or the like in which a relative speed is small, thus presenting a problem that a favorable reproduction can not be effected.

Meanwhile, in the MR head utilizing the magneto-resistive effect, i.e., MR effect, the electrical resistance value of a magneto-resistive effect element (referred to as MR element hereinafter) is varied according to an absolute value of the magnetic flux flowing into the MR element, and since the electro-magnetic conversion is effected thereby, there is such an advantage that a high output is available irrespective of the relative speed between the recording medium and the magnetic head. However, due to the fact that the MR head is to be exclusively used for reproduction, another recording head is separately required.

The magnetic heads as described above to be prepared by the thin film process are characterized in that multi-channel heads are readily constituted by the fine pitch.

The most suitable example for applications of the multi-channel MR head and the multi-channel recording head which may be simultaneously used therewith is disclosed, for example, in a paper "thin film heads for multi-track tape recorders" by Shigeyoshi IMAKOSHI et al. (Sony Corp.) published in a preprint of the 79th convention of audio engineering society/October 12-16, 1985/New York, in which an inductive type head exclusive for recording and a yoke type MR head exclusive for reproduction which are used for constituting a 48 channel digital audio tape recorder are described.

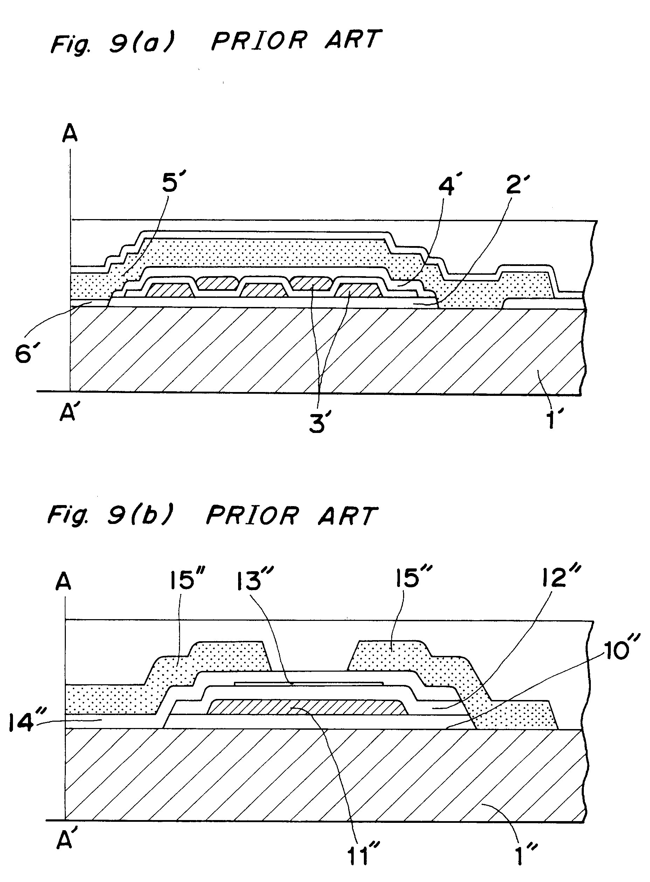

The known recording head as referred to above has a cross sectional construction for a single channel as shown in Fig. 9(a), and includes a magnetic substrate 1' (e.g. of ferrite), an induction coil 3' held between insulative layers 2' and 4' and formed on said magnetic substrate 1', and an upper record yoke 5' further formed thereon, and thus, said magnetic substrate 1' and said upper record yoke 5' constituting a magnetic circuit of the recording head, with a recording front gap 6' held therebetween. The induction coil 3' referred to above interlinks said recording magnetic circuit. When recording current is applied to the induction coil 3', the recording magnetic circuit is excited and recording magnetic field leaks from the recording front gap 6'. A magnetic tape (not shown) moving along a tape bearing face A-A' is subjected to magnetic recording by this leaking magnetic field.

Fig. 9(b) shows a cross sectional construction for a single channel of an MR reproducing head also described in the paper as referred to above, which generally includes a magnetic substrate 1'' (e.g. of ferrite), a bias layer 11'' held between the insulative layers 10'' and 12'' and formed on the substrate 1'', and an MR element 13'' sandwiched between the insulative layer 12'' and an insulative layer 14'' and formed on said layer 12''. The bias layer 11'' is so provided that a magnetic field produced by a bias current flowing therethrough in a direction perpendicular to a paper surface (not shown) properly subjects the MR element 13'' to the magnetic bias. On the insulative layer 14'', there is further provided an upper reproduce yoke 15'', which is cut out generally at its central portion as shown , and the MR element 13'' is adapted to bridge said cut-out portion through the insulative layer 14''. Thus, the magnetic substrate 1'', the upper reproduce yoke 15'' and the MR element 13'' constitute the magnetic circuit of the reproducing head through the front reproducing gap held therebetween. The reproducing magnetic flux flowing into said reproducing magnetic circuit from the magnetic tape (not shown) moving along the tape bearing face A-A' passes through the MR element 13'', and electrical resistance variation corresponding to the signal strength variation is produced in the MR element 13'' by the magneto-resistive effect so as to be taken out as a reproduction signal.

By using the thin film magnetic head as described above, effective magnetic recording can be made even in an apparatus with comparatively slow tape speed.

As described so far, although the characteristic of the MR head is very useful, the occupying volume permitted to the magnetic head within the apparatus becomes smaller due to size reduction of the apparatus, etc. Therefore, it becomes necessary to reduce the size of the magnetic head itself, and the fact that a recording head is separately required since the head is exclusive for reproduction, presents a serious problem.

Accordingly, the construction in which the recording head and the reproducing head are integrally formed in a compact size is required, but as described earlier, in the structure in which the recording head and reproducing head based on the prior art are merely formed to be laminated on the same substrate, false pulse is generated by the interference to be produced between the both heads, thus resulting in the deterioration of error rate, etc.

### 2. Description of the Prior Art

### SUMMARY OF THE INVENTION

Accordingly, an essential object of the present invention is to provide a composite thin film magnetic head including an integral structure of an inductive recording head and an MR reproducing head, which are free from any problems, even when these heads are formed on the same substrate.

Another object of the present invention is to provide a composite thin film magnetic head of the above described type, which is simple in construction and stable in functioning at high reliability, and can be readily manufactured at low cost.

In accomplishing these and other objects, according to one preferred embodiment of the present invention, there is provided a composite thin film magnetic head which includes a magnetic or non-magnetic substrate, a recording thin film magnetic head having a lower record yoke and an upper record yoke disposed to constitute a recording head magnetic path including a recording gap and also a recording coil interlinking said recording head magnetic path respectively and formed on said substrate, a non-magnetic insulative layer formed on said recording thin film magnetic head as a separating layer, and a reproducing thin film magnetic head having a lower reproduce yoke and an upper reproduce yoke disposed to constitute a reproducing head magnetic path including a reproducing gap and a magneto-resistive effect element disposed to magnetically bridge a cut-out portion formed at part of said upper reproduce yoke, a thickness of said lower reproduce yoke being set to be larger than that of said upper reproduce yoke.

More preferably, in the above arrangement, the thickness of said lower reproduce yoke is set to be larger than 2µm.

Moreover, the gap between the lower reproduce yoke and the upper record yoke is also set to be larger than 2µm.

In the above arrangement, by thickening the lower reproduce yoke to be larger than the upper reproduce yoke, the shield effect at this portion is improved and the magnetic flux reaching the MR element therethrough is reduced, and thus, the false pulses are consequently reduced. Moreover, by increasing the gap between the lower reproduce yoke and the upper record yoke, inclination of the false signal in a slope shape produced to correspond to said gap portion is reduced, thus, also resulting in the reduction of the false pulses.

Thus, according to the present invention, the inductive recording head and the MR reproducing head are integrally formed on the same substrate, with less mutual interference between said recording head and the reproducing head, and accordingly, a high performance thin film magnetic head can be obtained at low error rate.

### BRIEF DESCRIPTION OF THE DRAWINGS

These and other objects and features of the present invention will become apparent from the following description taken in conjunction with the preferred embodiment thereof with reference to the accompanying drawings, in which:
Fig. 1 is a schematic side sectional view of a composite thin film magnetic head according to one preferred embodiment of the present invention,
Fig. 2(a) is a fragmentary cross sectional view schematically showing the construction of a composite thin film magnetic head to which the present invention may be applied,
Fig. 2(b) is a graphical diagram showing relation between a position of a magnetic pole N and a reproduction output waveform,
Fig. 3 is a graphical diagram showing a recording current waveform corresponding to the isolated magnetic transition,
Fig. 4 is a graphical diagram showing a recording current waveform corresponding to one pulse,
Fig. 5 is a graphical diagram showing relation between a recording current waveform corresponding to the isolated magnetic transition and a recording current waveform corresponding to one pulse,
Fig. 6 is a graphical diagram for explaining that one pulse reproducing waveform can be obtained by a linear superposition of a reproducing output waveform of the isolated magnetic transition,
Fig. 7 is a graphical diagram showing an experimental relation between false pulse ratio and one pulse width, with thickness of a lower reproduce yoke set as a parameter,
Fig. 8 is a graphical diagram showing an experimental relation between false pulse ratio and one pulse width, with a space between the lower reproduce yoke and the upper record yoke set as a parameter,
Fig. 9(a) is a fragmentary cross sectional view of a conventional coil type recording head (already referred to),
Fig. 9(b) is a fragmentary cross sectional view of a conventional MR reproducing head (already referred to), and
Fig. 10 is a view similar to Fig. 1, which particularly shows another embodiment.

### DETAILED DESCRIPTION OF THE INVENTION

Before the description of the present invention proceeds, it is to be noted here that like parts are designated by like reference numerals throughout the accompanying drawings.

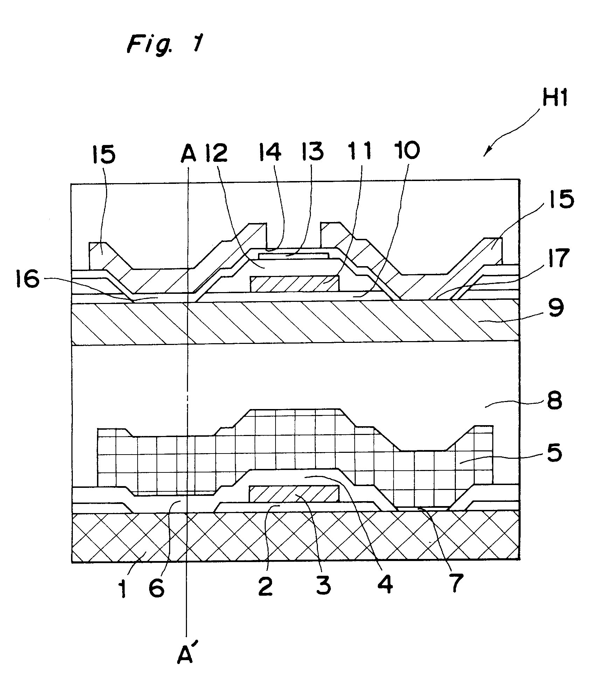

Referring now to the drawings, there is shown in Fig. 1, a composite thin film magnetic head H1 according to one preferred embodiment of the present invention.

Firstly, in the composite thin film magnetic head H1 in Fig. 1, an inductive type head for recording includes a magnetic substrate 1, a coil layer 3 formed through a first insulative layer 2 on the magnetic substrate 1, and an upper record yoke 5 further formed thereon through a second insulative layer 4. At a front gap portion 6 of the inductive head, the gap length is restricted by the second insulative layer 4, while at a rear gap portion 7, the magnetic substrate 1 is magnetically coupled with the upper record yoke 5 as shown.

It is to be noted here that although the present embodiment relates to the case where the recording coil layer is of one turn, the turn is not limited to the above, but may of course be of a plurality of turns depending on necessity.

Over the recording head as described above, a separating layer 8 made of a non-magnetic material is formed. Immediately after formation of the separating layer 8, since its surface is transferred with the undulation of the inductive head as it is, such surface is smoothed by machine polishing (for example, lapping or the like).

The MR head in Fig. 1 includes a lower reproduce yoke 9 formed on the separating layer 8, a bias layer 11 formed thereon through a third insulative layer 10, an MR element 13 further formed thereon through a fourth insulative layer 12. It is to be noted that the bias layer 11 is provided to cause D.C. bias current to flow therethrough (in a direction perpendicular to the paper surface), and to subject the MR element to magnetic biasing by the magnetic field produced thereby. Furthermore, lead layers (not shown) for impressing a sense current to the MR element 13 in a direction perpendicular to the paper surface are formed at opposite ends of the MR element 13, while an upper reproduce yoke 15 for inducing signal magnetic field on a magnetic tape to the MR element 13 is further formed through a fifth insulative layer 14. At a front gap portion 16 of the MR head, the gap length is restricted by the fifth insulative layer 14, and at a rear gap portion 17, the lower reproduce yoke 9 and the upper reproduce yoke 15 are magnetically coupled with each other.

It should be noted here that in the actual completed magnetic head, the portion up to a position A-A' from the left side in Fig. 1 is subjected to polishing processing, and the surface at the position A-A' becomes a tape bearing surface.

In the fundamental structure as described above, the thickness of said lower reproduce yoke 9 is set to be larger than that of the upper reproduce yoke 15. More preferably, the thickness of the lower reproduce yoke 9 is set to be larger than 2µm, and the gap between the lower reproduce yoke 9 and the upper record yoke 5 is also set to be larger than 2µm. It is to be noted that the gap between said yokes 9 and 5 means the gap at the tape bearing surface A-A'.

It should also be noted here that in the present invention, the magnetic head may be so constructed as to employ a non-magnetic substrate, with both of the upper and lower record yokes being made of magnetic thin films, or to adopt a magnetic material for the substrate so as to be commonly utilized as a lower record yoke as shown in Fig. 1.

Subsequently, how the suppression of the interference between the recording head and the reproducing head (i.e. generation of false pulses, etc.) is achieved by the restriction of the thickness at the yoke portions according to the present invention, will be explained in detail.

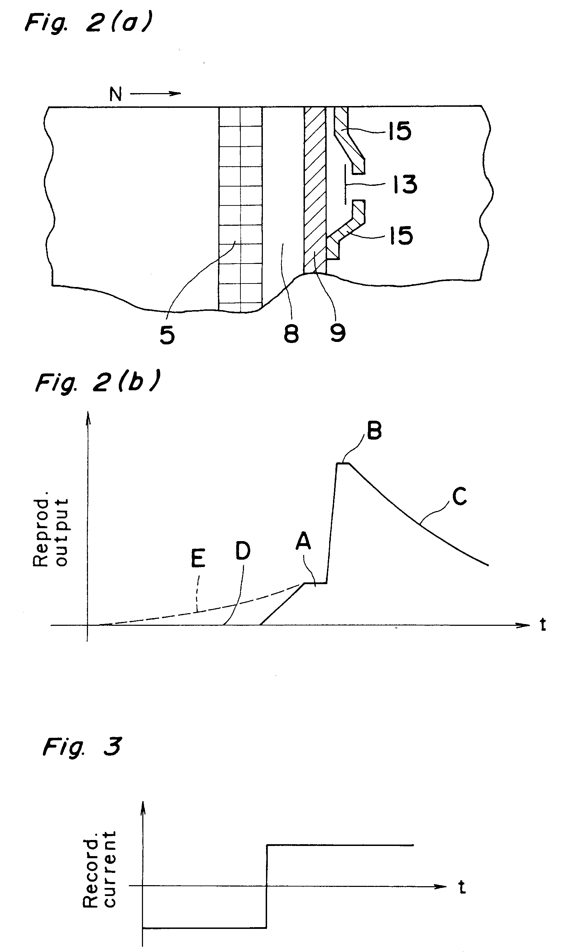

In the first place, Figs. 2 show the way how the false pulses are produced when the recording head and the MR reproducing head are simply arranged.

In a fragmentary cross section of the composite thin film magnetic head in Fig. 2(a), there is provided an upper record yoke 5, on which a lower reproduce yoke 9, an MR element 13, and an upper reproduce yoke 15 are further provided through a recording and reproducing space 8. It is to be noted here that the space 8 between the recording and reproducing is the gap between the lower reproduce yoke 9 and the upper record yoke 5 at the tape bearing surface A-A' in the actual heads in Fig. 1, and that since the presence of the magnetic substrate or the lower record yoke is hardly concerned in the generation of the false pulses, description thereof is abbreviated here for brevity.

Meanwhile, Fig. 2(b) shows an MR head output when isolated magnetic transition on the magnetic recording medium has passed over the magnetic head. The isolated magnetic transition is in the state as recorded by a recording current as shown in Fig. 3. In plain words, to reproduce the above state by the MR head means to find the output of the MR head in the case where a single magnetic pole N as shown in Fig. 2(a) moves on a magnetic head bearing surface, and Fig. 2(b) shows flux density produced on the MR element 13 at each position of the magnetic pole N.

When the magnetic pole approaches the magnetic head from the left side in Fig. 2(a), the MR output is hardly produced up to the upper record yoke 5 (portion D, Fig. 2(b)). This is attributable to the fact that, since the upper record yoke 5 is weak in the coupling with respect to the MR element 13, the magnetic flux entering therefrom hardly passes through the MR element 13, so as to escape into the magnetic substrate or other portions. In other words, the upper record yoke 5 functions as a shield with respect to the MR element 13. Meanwhile, when the magnetic pole is present on the lower reproduce yoke 9, although said yoke 9 also functions as a shield fundamentally, part of the magnetic flux which has flowed in therefrom enters the MR element 13 through the reproducing front gap to produce an output as shown at a portion A in Fig. 2(b). Further, when the magnetic pole has arrived on the upper reproduce yoke 15, the output peak as shown at a portion B is produced. In the case where the magnetic pole goes over the upper reproduce yoke 15, very gentle output attenuation as at a portion C is observed, since there is no portion functioning as a shield thereafter. In other words, the magnetic head senses the magnetic pole at a region considerably spaced therefrom.

It is to be noted here that the output is shifted generally linearly each between the portion D and the portion A, or between the portion A and the portion B, and that in the absence of magnetic members such as the magnetic head, magnetic substrate, etc. at the left side of the reproducing head, the portion D does not become zero, but forms a very gentle attenuation E continuous from the end of the portion A.

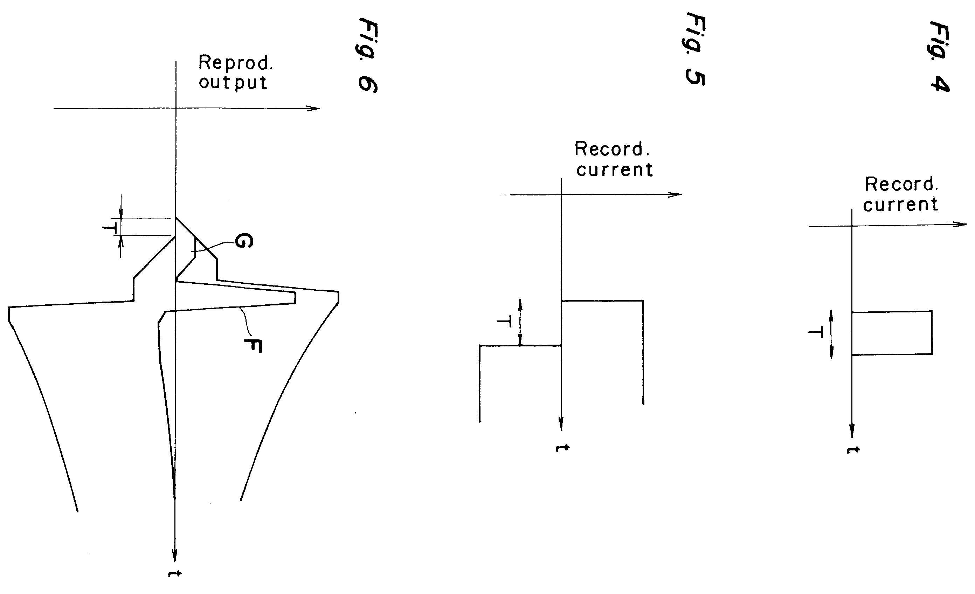

Based on the consideration as described above, the false pulse in a reproduction response with respect to one pulse recording current with a pulse width T as shown in Fig. 4 can be discussed. The pulse in Fig. 4 is clearly of a linear superposition of two isolated magnetic transition spaced at a distance T as shown in Fig. 5, and therefore, in terms of approximation, the reproduction pulse corresponding thereto will become the reproduction waveform in Fig. 2(b) subjected to subtraction through deviation by T (Fig. 6). A false pulse G is formed with respect to a main pulse F.

As is readily understood by Fig. 6, the false pulse G is generated by the presence of the portion A and a slope between the portion A and the portion D. If the pulse width T is sufficiently long, the false pulse wave height becomes the height at the portion A, and the sharper the inclination of the slope between the portions A and D, the false pulse wave height reaches the height at the portion A by the smaller width T. Therefore, the sharper the above inclination is, the larger is the area surrounded by the false pulse to produce an undesirable effect. Thus, it will be easily understood that for example, if the recording head or the like is not present, and the slope is gentle as at a portion E in Fig. 2(b), the false pulse is reduced.

Therefore, in order that the false pulse becomes small, it is preferable that the height at the portion A is low, and the slope between the portion A and the portion D is gentle.

Accordingly, the condition for reducing the height at the portion A is considered. For this purpose, it is necessary that the reproducing magnetic flux flowing in through the lower reproduce yoke 9 does not readily reach the MR element 13 through the upper reproduce yoke 15. In other words, it is required that the lower reproduce yoke 9 works as a shield, and has a good function to allow the reproducing magnetic flux to escape to other portions than the MR element 13, and for this purpose, the magnetic reluctance of the lower reproduce yoke 9 is low, with a high magnetic coupling for coupling the lower reproduce yoke 9 to the recording head and the magnetic substrate.

In order to reduce the magnetic reluctance of the lower reproduce yoke 9, it is first required that the relative magnetic permeability of the material for the yoke is high. In the general thin film materials, however, for example, the relative magnetic permeability of about 2000 or thereabout is employed, and since values much larger than that are not readily achieved, the magnetic reluctance must be reduced by increasing the thickness of the thin film. More specifically, notwithstanding the fact that in the reproducing head in general, particularly great importance is not attached to the yoke thickness due to the reason that the magnetic saturation is not brought into question, the large film thickness of the lower reproduce yoke 9 becomes necessary and important from the viewpoint as discussed here.

By the reason as described above, in order to make the reproduction magnetic flux entering the lower reproduce yoke 9, not readily reach the MR element 13 through the upper reproduce yoke 15, it will become one of guide lines to make the lower reproduce yoke 9 thicker than the upper reproduce yoke 15. More specifically, since the thickness of the upper reproduce yoke 15 is generally in the range of 1 to 2µm, the thickness of the lower reproduce yoke 9 should preferably be made larger than 2µm.

Meanwhile, upon directing attention to the size of the gap 8 between the recording head and the reproducing head, although the height at the portion A is increased when the gap is enlarged, the slope between the portions A and D becomes gentle simultaneously. Thus, by which of the above two effects is predominant when the gap is enlarged, it is determined whether the false pulse G becomes larger or smaller. Although it is difficult to make further discussion by the model here, the false pulse ratio becomes small by enlarging the gap, according to the actually measured values to be described later, and therefore, it is considered that the effect for making the slope between the portions A and D gentle is larger, with a consequent reduction of the false pulse G.

Subsequently, the condition to render the slope between the portions A and D gentle will be considered. For this purpose, in the first place, it is necessary to reduce the height at the portion A, which may be achieved in the manner as described earlier. In the second place, it is required to enlarge the gap between the recording head and the reproducing head. However, to simply enlarge this gap will qualitatively cause an effect to reduce the magnetic coupling for connecting the lower reproduce yoke 9 to the record yoke or magnetic substrate, and therefore, is not fully desirable. However, in the actual case, since the practice to increase the gap to provide a gentle slope between the portions A and D, has a larger effect, the increase of the gap as described above may still be effected for the purpose.

Based on the fundamental technical concept according to the present invention as described above, the false pulse ratio (decibel ratio with respect to main pulse wave height value) when the thickness of the lower reproduce yoke 9 and the space 8 between the recording and reproducing are varied, has been actually measured.

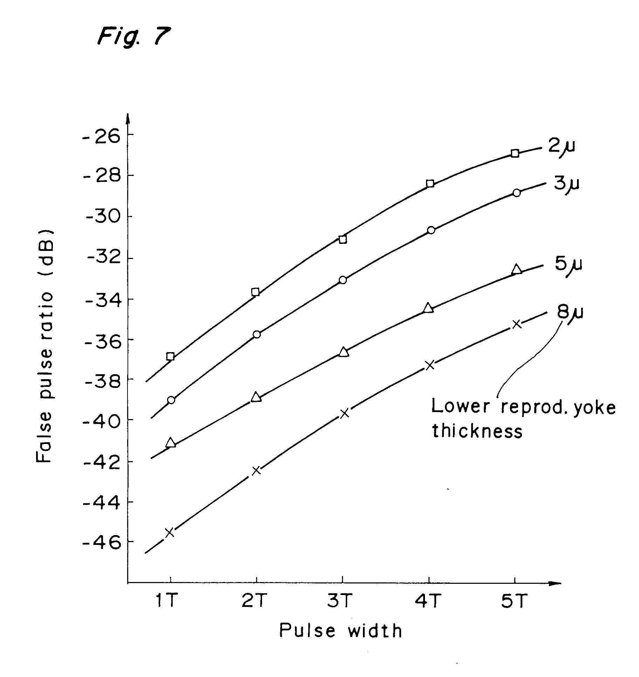

A graph in Fig. 7 represents the false pulse ratio when the thickness of the lower reproduce yoke 9 is varied, with the thickness of the upper reproduce yoke 15 being set at 2µm, and with the space between the recording and reproducing set to be constant at 2µm.

In Fig. 7, the abscissa denotes pulse width of one pulse at T = 0.5µm. Since the false pulse ratio is increased as the pulse width becomes larger, evaluation must be made at the maximum pulse width 5T. Since -26dB or thereabout is generally required as the false pulse ratio, it is seen from Fig. 7 that with respect to the space between the recording and reproducing at 2µm, the thickness more than 2µm is necessary for the lower reproducing yoke 9. It is to be noted here that the above -26dB is referred to as a threshold false pulse ratio.

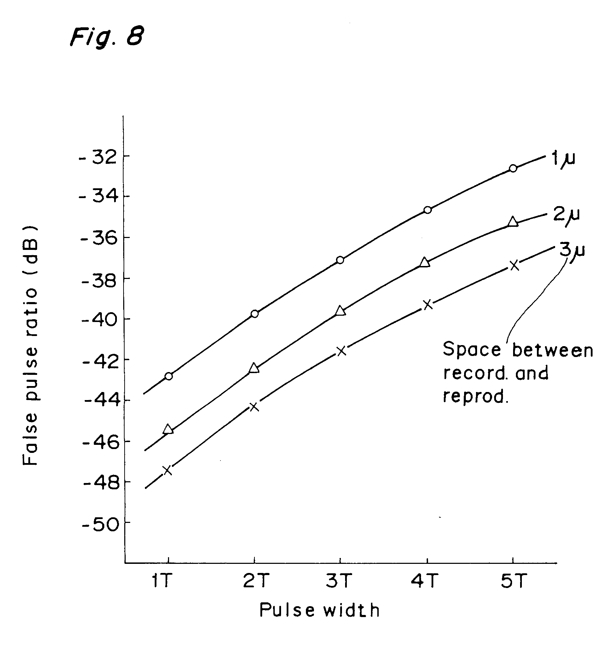

Meanwhile, a graph in Fig. 8 shows the results when the space between the recording and reproducing is varied, with the thickness of the lower reproduce yoke 9 set to be constant at 8µm. From the results, it is seen that the false pulse ratio of about -35dB can be obtained with respect to, for example, the pulse width of 5T and the space between the recording and reproducing of 2µm. The fact that the false pulse ratio fully sufficient with respect to the threshold false pulse ratio of -26dB may be obtained, means that the thickness of the lower reproduce yoke 9 is sufficiently too large. Therefore, it will be calculated hereinafter that, when the space 8 between the recording and reproducing is 2µm, what is the thickness sufficient for the lower reproduce yoke 9.

Referring back to Fig. 7, it is shown that when the thickness of the lower reproduce yoke 9 is reduced from 8µm to 2µm, the false pulse ratio is deteriorated by about 8dB, and therefore, in Fig. 8 also, if the thickness of the lower reproduce yoke is reduced from 8µm to 2µm, the false pulse ratio is considered to be deteriorated by 8dB. In other words, with respect to the thickness of the lower reproduce yoke 9 = 2µm, the space 8 between the recording and reproducing = 2µm and the pulse width 5T, the false pulse ratio is calculated as -35 + 8 = -27dB, which is close to the threshold value -26dB. Accordingly, there will be obtained a guide line that when the thickness larger than 2µm for the lower reproduce yoke 9 is adopted, the space between the recording and reproducing should be set at more than 2µm.

The discussion given so far relates to the magnetic head as shown in Fig. 1 in which the upper record yoke 5 and the lower reproduce yoke 9 are perfectly separated from each other.

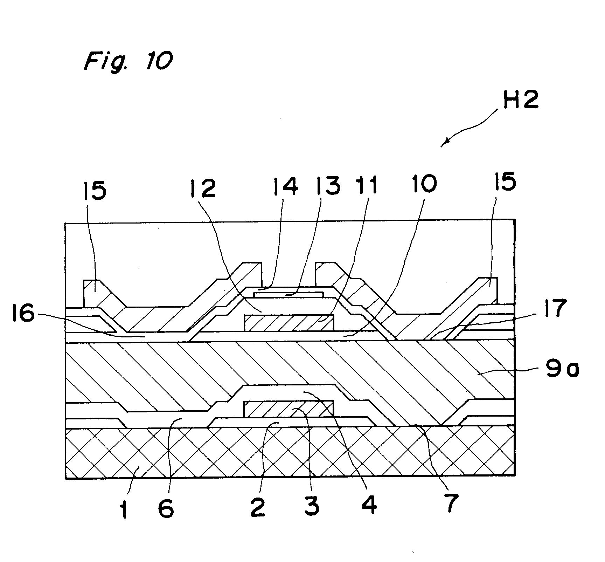

On the other hand, in the recording and reproducing composite head of this kind, an arrangement in which the upper record yoke and the lower reproduce yoke are commonly utilized through one magnetic layer to provide a shard pole 9a as shown in a magnetic head H2 according to a second embodiment of the present invention in Fig. 10 is sometimes employed for the purpose of simplification of the manufacturing process, etc. Such construction as described above will be referred to as a shared pole structure. When the concept related to the generation of the false pulse as described earlier is applied to this shared pole structure, it will be understood that the thickness of the shared pole may be considered to be equivalent to the thickness of the lower reproduce yoke 9 in Fig. 1, and the recording gap length in Fig. 10 may be considered as equivalent to the recording and reproducing space 8 in Fig. 1.

Since other construction and function of the magnetic head H2 of Fig. 10 are generally similar to those of the magnetic head H1 in Fig. 1, detailed description thereof is abbreviated here for brevity, with like parts being designated by like reference numerals.

On the basis of the concept as described above, a guide line for the yoke thickness related to the false pulse in the case of the shared pole structure will be derived hereinafter.

Referring back to Fig. 7, since the graph represents the case where the recording and reproducing space 8 is 2µm, it is equivalent to the recording gap length = 2µm in the shared pole structure. Therefore, it is seen from Fig. 7 that, when the thickness of the shared pole is larger than 2µm with respect to the recording gap length of 2µm, the false pulse ratio less than -27dB may be obtained, which is sufficient for the purpose. However, in the recent high density recording head, recording gap length of about 1µm is also normally used, and therefore, a guide line with respect to the gap length of 1µm will be more generally applicable. For finding such a guide line, since it is seen from Fig. 8 that when the recording and reproducing space is reduced from 2µm to 1µm, the false pulse ratio is increased by about 3dB, it will be understood that in Fig. 7, consideration may be given by correcting to lower the ordinate downward by 3dB. In other words, when the recording gap length is 1µm, the threshold false pulse ratio of -26dB can be maintained if the thickness of the shared pole is larger than 3µm.

It should be noted here that in the foregoing description of the present invention, although the magnetic head is assumed to be used as the digital head and explanation is given from the viewpoint that how the false pulse, which becomes the noise with respect to the main pulse, is generated, similar description may also be applied to the case where the head having the construction to be dealt with by the present invention is utilized as an analog head. In this case, the phenomenon of the false pulse in the digital unit appears as a swell in the frequency characteristics in the analog unit.

It should also be noted here that in the foregoing description, although the present invention has been explained as related to the problem of false pulses to be caused by the recording head closely disposed to the reproducing head, the problem as referred to above may be brought about when any other magnetic member is present in the vicinity of the reproducing head, and can be solved by the technical concept of the present invention.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

## Claims

1. A composite thin film magnetic head which comprises a magnetic or non-magnetic substrate, a recording thin film magnetic head having a lower record yoke and an upper record yoke disposed to constitute a recording head magnetic path including a recording gap and also a recording coil interlinking said recording head magnetic path respectively and formed on said substrate, a non-magnetic insulative layer formed on said recording thin film magnetic head as a separating layer, and a reproducing thin film magnetic head having a lower reproduce yoke and an upper reproduce yoke disposed to constituted a reproducing head magnetic path including a reproducing gap and a magneto-resistive effect element disposed to magnetically bridge a cut-out portion formed at part of said upper reproduce yoke, a thickness of said lower reproduce yoke being set to be larger than that of said upper reproduce yoke.

2. A composite thin film magnetic head as claimed in Claim 1, wherein the thickness of said lower reproduce yoke is set to be larger than 2µm.

3. A composite thin film magnetic head as claimed in Claim 1, wherein a gap between said lower reproduce yoke and said upper record yoke is set to be larger than 2µm.

4. A composite thin film magnetic head as claimed in Claim 1, wherein the magnetic substrate is employed for said substrate, and said lower record yoke is substituted by the magnetic substrate.

5. A composite thin film magnetic head as claimed in Claim 1, wherein said lower reproduce yoke and said upper record yoke are commonly used as a shared pole, said shared pole having a thickness larger than 3µm.
